# EUROPEAN PATENT APPLICATION

(11) **EP 4 770 248 A1**
(43) Date of publication of application: **01.07.2026**
(21) Application number: 24870181.5
(22) Date of filing: 14.08.2024
(51) Int. Cl.: H04W 72/40, H04L 5/00

(54) **SIDELINK COMMUNICATION METHOD AND APPARATUS**

(30) Priority: 27.09.2023 CN 202311290639
(71) Applicant: HUAWEI TECHNOLOGIES CO., LTD., Shenzhen 518129 (CN)
(72) Inventor: HUANG, Su, Shenzhen, Guangdong 518129 (CN)
(74) Representative: Goddar, Heinz J.
(86) International application number: PCT/CN2024/112118
(87) International publication number: WO 2025/066633

(57) **Abstract**

Embodiments of this application provide a sidelink communication method and an apparatus, to collect statistics on a quantity of transmissions of an SL PRS. A transmit end terminal device determines to send a first SL PRS by using a first resource, where the first resource is a resource reserved by using SCI corresponding to a second SL PRS, and the second SL PRS is sent before the first SL PRS; and determines that a quantity of transmissions corresponding to the first SL PRS is a quantity of transmissions corresponding to the second SL PRS plus 1. In this solution, a previous transmission of an SL PRS sent by using a resource reserved by using SCI is counted as one retransmission, so that statistics on the quantity of transmissions of the SL PRS are collected. Therefore, congestion control for the SL PRS can be supported, and system communication performance can be improved.

## Description

### CROSS-REFERENCE TO RELATED APPLICATIONS

This application claims priority to Chinese Patent Application No. 202311290639.3, filed with the China National Intellectual Property Administration on September 27, 2023 and entitled "SIDELINK COMMUNICATION METHOD AND APPARATUS", which is incorporated herein by reference in its entirety.

### TECHNICAL FIELD

This application relates to the field of communication technologies, and in particular, to a sidelink communication method and an apparatus.

### BACKGROUND

Currently, sidelink (sidelink, SL) communication supports a data retransmission. To be specific, when a receive end incorrectly decodes a transport block (transport block, TB) carried on a physical sidelink shared channel (physical sidelink shared channel, PSSCH), the receive end may indicate a transmit end to retransmit the TB, and the receive end may perform combined decoding on receiving results of an initial transmission and a retransmission, to improve a decoding accuracy rate. In principle, after receiving a NACK (NACK) fed back by the receive end, the transmit end may initiate a retransmission indefinitely until receiving an ACK (ACK) fed back by the receive end. However, a large quantity of retransmissions may cause network congestion. To avoid the network congestion, congestion control is introduced into the SL communication. To be specific, after a quantity of retransmissions of one TB reaches a threshold, the TB is no longer retransmitted. In a data retransmission solution, the transmit end and the receive end identify or recognize, based on a hybrid automatic repeat request (hybrid automatic repeat request, HARQ) process (process) identifier (ID) and a new data indicator (New data indicator, NDI) field, whether data is newly transmitted or retransmitted.

In an actual situation, in addition to a data retransmission, a retransmission of a positioning reference signal (Positioning reference signal, PRS) also causes network congestion. However, an SL PRS does not have a HARQ process ID, and therefore, statistics on a specific SL PRS that is initially transmitted and a specific SL PRS that is retransmitted cannot be collected. Therefore, statistics on a quantity of transmissions of the SL PRS cannot be collected, and congestion control cannot be performed on the SL PRS, affecting system communication performance.

### SUMMARY

Embodiments of this application provide a sidelink communication method and an apparatus, to collect statistics on a quantity of transmissions of an SL PRS, so as to support congestion control for the SL PRS and improve system communication performance.

According to a first aspect, a sidelink communication method is provided. The method may be applied to a transmit end terminal device or a chip in the transmit end terminal device. An example in which the method is applied to the transmit end terminal device is used. The method includes: determining to send a first sidelink (sidelink, SL) positioning reference signal (Positioning reference signal, PRS) by using a first resource, where the first resource is a resource reserved by using sidelink control signaling (sidelink control information, SCI) corresponding to a second SL PRS, and the second SL PRS is sent before the first SL PRS; and determining that a quantity of transmissions corresponding to the first SL PRS is a quantity of transmissions corresponding to the second SL PRS plus 1.

In this embodiment of this application, a previous transmission of an SL PRS sent by using a resource reserved by using SCI is counted as one retransmission, so that statistics on a quantity of transmissions of the SL PRS are collected. Therefore, congestion control for the SL PRS can be supported, and system communication performance can be improved.

In a possible design, the first resource is a resource in a dedicated resource pool, and the dedicated resource pool is used to send an SL PRS but cannot be used to send a physical sidelink shared channel (physical sidelink shared channel, PSSCH).

In other words, this embodiment of this application may be used to calculate a quantity of transmissions of the SL PRS in the dedicated resource pool.

In a possible design, the resource reserved by using the SCI corresponding to the second SL PRS is an aperiodically reserved resource.

For example, when a resource reserved by using the SCI for an initial transmission is an aperiodic reservation, the resource reserved by using the SCI corresponding to the second SL PRS is the aperiodically reserved resource; or when the resource reserved by using the SCI for the initial transmission is a periodic reservation, the resource reserved by using the SCI corresponding to the second SL PRS is an aperiodically reserved resource in a single period.

In a possible design, a sending moment of the first SL PRS and a sending moment of the second SL PRS fall within a preset time range.

In this way, statistics on a quantity of transmissions of the SL PRS sent within the preset time range can be collected, to help control a statistical quantity of transmissions of the SL PRS based on an actual requirement. For example, when the transmit end terminal device needs to have more retransmission opportunities, the preset time range may be set to short duration, so that a maximum value of a statistical result is smaller. For example, when a quantity of the retransmission opportunities of the transmit end terminal device needs to be reduced, the preset time range may be set to long duration, so that the maximum value of the statistical result is greater. In this implementation, flexibility of collecting statistics on the quantity of transmissions of the SL PRS can be improved.

In a possible design, the preset time range is a period corresponding to a periodically reserved resource.

In this way, when the resource reserved by using the SCI for the initial transmission is the periodic reservation, statistics on a quantity of transmissions of the SL PRS sent in the single period can be collected, to avoid collecting statistics on quantities of transmissions of SL PRSs across periods (because an SL PRS initially transmitted in a new period needs to be newly transmitted instead of being retransmitted in comparison with an SL PRS sent in an old period), and improve reliability of the solution.

In a possible design, the preset time range is one time window.

In this way, statistics on a quantity of transmissions of the SL PRS sent in one time window can be collected.

In a possible design, a position of the time window in time domain is determined based on a position of the sending moment of the first SL PRS in time domain.

In other words, the position of the time window may change with time.

In a possible design, the time window is a time window within which the sending moment of the first SL PRS falls and that is in a plurality of time windows that periodically appear in time domain.

In other words, the position of the time window may be fixed.

In a possible design, if the quantity of transmissions corresponding to the first SL PRS reaches a threshold, a retransmission of the SL PRS is stopped.

In this way, congestion control for the SL PRS can be implemented, and system communication performance can be improved.

According to a second aspect, a sidelink communication method is provided. The method may be applied to a transmit end terminal device or a chip in the transmit end terminal device. An example in which the method is applied to the transmit end terminal device is used. The method includes: determining to send a first SL PRS, where SCI corresponding to the first SL PRS includes a first identifier; and increasing a quantity of transmissions of an SL PRS corresponding to the first identifier by 1.

In this embodiment of this application, an identifier included in SCI is used to collect statistics on a quantity of transmissions of an SL PRS corresponding to a same identifier, so that statistics on a quantity of transmissions of the SL PRS are collected. Therefore, congestion control for the SL PRS can be supported, and system communication performance can be improved.

In a possible design, a resource reserved by using the SCI is a resource in a dedicated resource pool, and the dedicated resource pool is a resource pool that is used to send an SL PRS but cannot be used to send a PSSCH.

In other words, in this embodiment of this application, a quantity of transmissions of the SL PRS in the dedicated resource pool can be calculated.

In a possible design, the first identifier is used by a receive end to perform combined measurement on SL PRSs that correspond to the first identifier and that are in different transmissions.

In this way, statistics on the quantity of transmissions of the SL PRS are collected by using an identifier used to perform combined measurement, and there is no need to additionally design an identifier separately to collect statistics on the quantity of transmissions of the SL PRS; and an implementation is simple and reliable.

In a possible design, a sending moment of the first SL PRS falls within a preset time range.

In this way, statistics on a quantity of transmissions of the SL PRS sent within the preset time range can be collected, to help control a statistical quantity of transmissions of the SL PRS based on an actual requirement. For example, when the transmit end terminal device needs to have more retransmission opportunities, the preset time range may be set to short duration, so that a maximum value of a statistical result is smaller. For example, when a quantity of the retransmission opportunities of the transmit end terminal device needs to be reduced, the preset time range may be set to long duration, so that the maximum value of the statistical result is greater. In this implementation, flexibility of collecting statistics on the quantity of transmissions of the SL PRS can be improved.

In a possible design, the preset time range is one time window.

In this way, statistics on the quantity of transmissions of the SL PRS can be collected in one time window based on an identifier.

In a possible design, a position of the time window in time domain is determined based on a position of the sending moment of the first SL PRS in time domain.

In other words, the position of the time window may change with time.

In a possible design, the time window is a time window within which the sending moment of the first SL PRS falls and that is in a plurality of time windows that periodically appear in time domain.

In other words, the position of the time window may be fixed.

In a possible design, if the quantity of transmissions of the SL PRS corresponding to the first identifier reaches a threshold, a transmission of the SL PRS corresponding to the first identifier is stopped.

In this way, congestion control for the SL PRS can be implemented, and system communication performance can be improved.

According to a third aspect, a communication apparatus is provided, and includes a module, a unit, or a technical means configured to perform the method according to any one of the first aspect or the possible designs of the first aspect.

For example, the apparatus may include a processing module, configured to: determine to send a first SL PRS by using a first resource, where the first resource is a resource reserved by using SCI corresponding to a second SL PRS, and the second SL PRS is sent before the first SL PRS; and determine that a quantity of transmissions corresponding to the first SL PRS is a quantity of transmissions corresponding to the second SL PRS plus 1.

Optionally, the apparatus may further include a transceiver module, configured to send the first SL PRS by using the first resource.

According to a fourth aspect, a communication apparatus is provided, and includes a module, a unit, or a technical means configured to perform the method according to any one of the second aspect or the possible designs of the second aspect.

For example, the apparatus may include a processing module, configured to: determine to send a first SL PRS, where SCI corresponding to the first SL PRS includes a first identifier; and increase a quantity of transmissions of an SL PRS corresponding to the first identifier by 1.

Optionally, the apparatus may further include a transceiver module, configured to send the first SL PRS.

According to a fifth aspect, a communication apparatus is provided, including a processor, where the processor is coupled to a memory, the memory is configured to store a program or instructions, and when the program or the instructions are executed by the processor, the communication apparatus is caused to perform the method according to any one of the first aspect or the possible designs of the first aspect, or the communication apparatus is caused to perform the method according to any one of the second aspect or the possible designs of the second aspect.

According to a sixth aspect, a computer-readable storage medium is provided. The computer-readable storage medium stores computer-executable instructions, and when the computer-executable instructions are invoked by the computer, the method according to any one of the first aspect or the possible designs of the first aspect is performed, or the method according to any one of the second aspect or the possible designs of the second aspect is performed.

According to a seventh aspect, a computer program product is provided. The computer program product includes a computer program or instructions, and when the computer program or the instructions are run by a communication apparatus, the method according to any one of the first aspect or the possible designs of the first aspect is performed, or the method according to any one of the second aspect or the possible designs of the second aspect is performed.

For technical effects that can be achieved in the third aspect to the seventh aspect, refer to descriptions of technical effects that can be achieved in the corresponding design solutions in the first aspect to the second aspect. Details are not described herein again in this application.

### BRIEF DESCRIPTION OF DRAWINGS

FIG. 1 to FIG. 3 are diagrams of architectures of several communication systems to which embodiments of this application are applicable;
FIG. 4 is a diagram of a possible network architecture to which an embodiment of this application is applicable;
FIG. 5 is a flowchart of a sidelink communication method according to an embodiment of this application;
FIG. 6A is a diagram of an aperiodic reservation;
FIG. 6B is a diagram of a periodic reservation;
FIG. 7A is a diagram of a sliding time window;
FIG. 7B is a diagram of a fixed time window;
FIG. 8 is a flowchart of another sidelink communication method according to an embodiment of this application;
FIG. 9 is a diagram of a structure of a communication apparatus according to an embodiment of this application; and
FIG. 10 is a diagram of a structure of another communication apparatus according to an embodiment of this application.

### DESCRIPTION OF EMBODIMENTS

The following first explains and describes a part of terms in this application, to facilitate understanding by a person skilled in the art.
(1) Sidelink (sidelink, SL): To be specific, the sidelink is a link for communication between terminal devices through a proximity-based services communication 5 (proximity-based services communication 5, PC5) interface, and is similar to an uplink communication link or a downlink communication link. The sidelink in embodiments of this application may also be referred to as a sidelink communication link, a sidelink, a sidelink, a direct link, a side link, a secondary link, or the like.
   For example, links for device-to-device (device-to-device, D2D) communication, long term evolution (long term evolution, LTE), vehicle-to-everything (vehicle-to-everything, V2X) communication, new radio (new radio, NR) V2X communication, and sidelink on unlicensed spectrum (Sidelink on unlicensed spectrum, SL-U) communication are all sidelinks.
(2) Resource pool (resource pool): The resource pool may be understood as a set of time-frequency resources. Frequency domain resources included in the resource pool are contiguous. Time domain resources included in the resource pool may be contiguous or non-contiguous. Different resource pools are distinguished by SL resource pool identifiers (for example, SL-ResourcePoolID). A terminal device performs reception in a reception resource pool, and performs sending in a transmission resource pool. If the resource pools have a same resource pool index, it may be considered that the time-frequency resources in the resource pools completely overlap.

In a sidelink on unlicensed spectrum (Sidelink on unlicensed spectrum, SL-U), a frequency band is shared by terminal apparatuses in a plurality of forms. For example, an SL terminal apparatus, a wireless fidelity (wireless fidelity, Wi-Fi) terminal apparatus, and a Bluetooth terminal apparatus perform a transmission on a same frequency band. Therefore, a concept of an SL-dedicated resource pool does not necessarily exist. The SL resource pool may also be understood as a set of resources that may be used for an SL transmission. In this embodiment, the resource pool may also be referred to as a channel (channel), an operating channel (operating channel), a nominal channel (nominal channel), or a bandwidth (bandwidth). In other words, the resource pool, the channel, and the bandwidth all represent the set of the resources that may be used for the SL transmission.

Two resource selection modes of an NR SL are as follows.

Resource selection mode 1 (mode 1): The resource selection mode 1 is a manner in which a network device selects an SL resource from a transmission resource pool for a transmit end terminal device. The network device may select one or more (for example, three) SL resources from one transmission resource pool at a time. A resource pool may be configured by the network device, or configured by an upper layer, or pre-configured (pre-configured).

Resource selection mode 2 (mode 2): The resource selection mode 2 is a manner in which a transmit end terminal device selects an SL resource from a transmission resource pool. The transmit end terminal device may select one or more (for example, three) SL resources at a time. A resource pool may be configured by a network device, or configured by an upper layer, or pre-configured.

A terminal device in a radio resource control (radio resource control, RRC) connected (connected) state may be configured by the network device to use the mode 1 or the mode 2, and a terminal device in an RRC idle (idle) state or inactive (inactive) state can use only the mode 2.

SL resource pools used to send an SL PRS may be classified into two types: a dedicated resource pool and a shared resource pool. A resource in the dedicated resource pool may be specially used to transmit the SL PRS. For example, to provide a possibility of a larger bandwidth, the resource is specially designed to ensure an SL PRS transmission, and cannot be used to transmit a PSSCH. A resource in the shared resource pool may be used to transmit both the PSSCH and the SL PRS. In a possible example, the terminal device may divide a part of symbols from symbols occupied by the PSSCH to send the SL PRS.

(3) Time domain resource: The time domain resource includes a symbol (symbol), a slot (slot), a mini-slot (mini-slot), a partial slot (partial slot), a subframe (subframe), a radio frame (frame) (also referred to as a frame), a sensing slot (sensing slot), and the like.

One slot may include at least one symbol, for example, 14 symbols or 12 symbols. There may be different types of slots, and quantities of symbols included in different types of slots are different. For example, the mini-slot (mini-slot) includes symbols whose quantity is less than 7, for example, two symbols, three symbols, or four symbols, and a common slot (slot) includes seven symbols or 14 symbols.

Based on different subcarrier spacings, symbol lengths may be different. Therefore, slot lengths may be different. For example, a length of a slot corresponding to a subcarrier spacing of 15 kHz is 0.5 ms, and a length of a slot corresponding to a subcarrier spacing of 60 kHz is 0.125 ms.

(4) Frequency domain resource: The frequency domain resource includes a sub-channel, a band (band), a carrier (carrier), a bandwidth part (BandWidth Part, BWP), a resource block (Resource Block, RB), a resource pool, or the like.

The sub-channel is a minimum unit of a frequency domain resource occupied by a physical sidelink shared channel, and one sub-channel may include one or more resource blocks (resource blocks, RBs). A bandwidth of a wireless communication system in frequency domain may include a plurality of RBs. For example, in possible bandwidths of an LTE system, quantities of included physical resource blocks (physical resource blocks, PRBs) may be 6, 15, 25, 50, and the like.

In frequency domain, one RB may include a plurality of subcarriers. For example, in the LTE system and an NR system, one RB includes 12 subcarriers, and each subcarrier spacing may be 15 kHz. Certainly, another subcarrier spacing may alternatively be used, for example, a subcarrier spacing of 3.75 kHz, 30 kHz, 60 kHz, or 120 kHz. This is not limited herein.

Subcarrier (subcarrier) or resource element (resource element, RE): The subcarrier or the RE is a minimum frequency resource unit on a specific symbol in a multi-carrier system. In embodiments of this application, the RE may be a resource unit of a time-frequency resource, for example, may be considered as a minimum time-frequency resource unit. For example, one RE occupies one symbol in time domain, and occupies one subcarrier in frequency domain. In other words, one subcarrier in one symbol in time domain is one RE. In this application, a subcarrier and a resource element may be used interchangeably, and have same meaning.

(5) Sidelink control signaling (sidelink control information, SCI): The sidelink control signaling is also referred to as sidelink control information. The SCI includes two stages of SCI, that is, first-stage SCI (1^{st}-stage SCI) and second-stage SCI (2^{nd}-stage SCI).

The first-stage SCI is carried on a physical sidelink control channel (physical sidelink control channel, PSCCH), and the first-stage SCI is used to schedule the second-stage SCI and a physical sidelink shared channel (physical sidelink shared channel, PSSCH). Because an SL is a distributed system, a receive end terminal apparatus can decode the PSSCH only after correctly decoding the first-stage SCI. In embodiments of this application, information carried on the PSSCH is described as data channel information. The data channel information includes data information, the second-stage SCI, and the like.

To reduce complexity of blind decoding (blind decoding) performed by the terminal apparatus on the PSCCH, a time-frequency resource position of the PSCCH is relatively fixed, and a format of the first-stage SCI carried on the PSCCH is also relatively unique. In other words, the terminal apparatus does not need to perform blind decoding on the time-frequency resource position of the PSCCH, and does not need to perform blind decoding on SCI in different formats. The terminal apparatus only needs to detect, at a fixed time-frequency resource position of the PSCCH, whether the first-stage SCI exists. The PSCCH exists in all or a part of sub-channels of each slot. For example, a time-domain start position of one PSCCH is a 2^{nd} symbol used for an SL transmission in each slot, and a quantity of symbols consecutively occupied by the PSCCH is 2 or 3. A frequency-domain start position of one PSCCH is an RB with a smallest index on each sub-channel, and a quantity of consecutively occupied RBs is at least 10 and does not exceed a size of the sub-channel.

For SL communication and a shared resource pool, the first-stage SCI includes a frequency domain resource assignment (frequency resource assignment) field and a time domain resource assignment (time resource assignment) field. The frequency domain resource assignment field indicates a frequency domain resource of the PSSCH, and the time domain resource assignment field indicates a time domain resource of the PSSCH. Optionally, the first-stage SCI further includes a resource reservation period (resource reservation period) field. The resource reservation period field indicates a period of a reserved resource for the PSSCH. A value of the resource reservation period field is configured by a network device, pre-configured (pre-configured), or predefined. For example, the network device indicates a time domain resource, a frequency domain resource, and a period that are of the PSSCH to the terminal apparatus by using radio resource control (radio resource control, RRC) signaling. Content indicated by the RRC signaling may be determined based on sl-ResourceReservePeriod.

The second-stage SCI is carried on the PSSCH. The second-stage SCI does not occupy resources of the PSCCH, a demodulation reference signal (demodulation reference signal, DMRS), and a phase tracking reference signal (phase tracking reference signal, PT-RS). The second-stage SCI is mainly used for hybrid automatic repeat request (hybrid automatic repeat request, HARQ) feedback of an NR SL, for example, indicating related information such as a HARQ process number (process number), a source identifier (source ID), and a destination identifier (destination ID). A format of the second-stage SCI is indicated by a second-stage SCI format (2^{nd}-stage SCI format) field in the first-stage SCI.

For a dedicated resource pool, the first-stage SCI includes a time domain resource assignment (time resource assignment) field and an SL PRS resource indication field. The time domain resource assignment field indicates a reserved slot of an SL PRS, and the SL PRS resource indication field indicates a specific SL PRS resource index reserved in the reserved slot of the SL PRS. Optionally, the first-stage SCI further includes a resource reservation period (resource reservation period) field. The resource reservation period field indicates a period of a reserved resource for the SL PRS. A value of the resource reservation period field is configured by a network device, pre-configured, or predefined. For example, the network device indicates a time domain resource, a frequency domain resource, and a period that are of the PSSCH to the terminal apparatus by using radio resource control (radio resource control, RRC) signaling. Content indicated by the RRC signaling may be determined based on sl-ResourceReservePeriod.

(6) In the descriptions of this application, terms such as "first" and "second" are merely used for differentiated description, and cannot be understood as an indication or implication of relative importance, or cannot be understood as an indication or implication of an order.

In the descriptions of this application, "at least one (type)" means one (type) or more (types), and a plurality of (types) means two (types) or more (types). "At least one of the following items" or a similar expression thereof means any combination of these items, including any combination of singular items or plural items. For example, at least one of a, b, or c may indicate a, b, and c, a and b, a and c, b and c, or a, b, and c, where a, b, and c may be singular or plural.

In the descriptions of this application, "and/or" describes an association relationship between associated objects, and indicates that three relationships may exist. For example, A and/or B may indicate the following three cases: Only A exists, both A and B exist, and only B exists. A and B may be singular or plural. "/" indicates "or". For example, a/b indicates a or b.

To describe the technical solutions in embodiments of this application more clearly, the following describes a communication method and apparatus provided in embodiments of this application in detail with reference to the accompanying drawings.

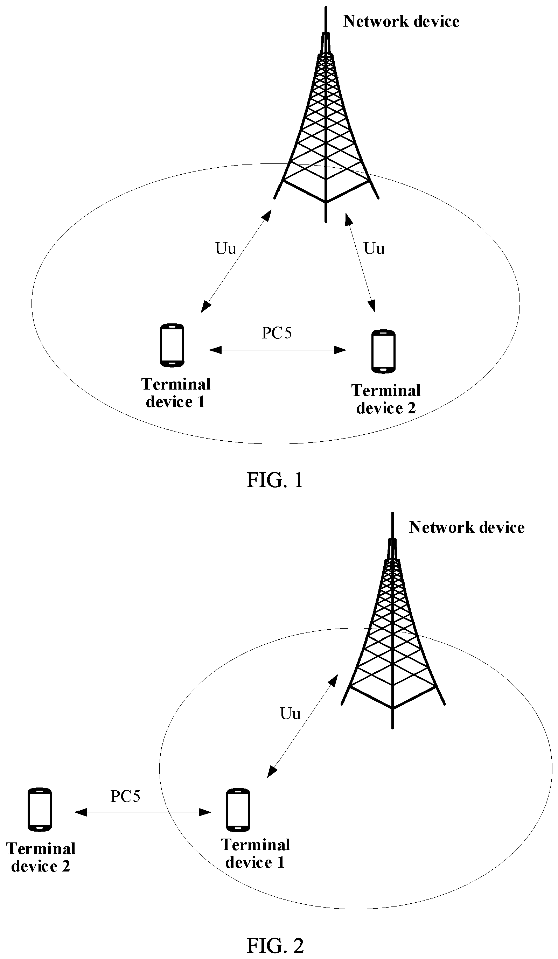

This application may be applied to a sidelink communication scenario. In this application, a terminal device may be located within a coverage area of a network device, or may be located outside the coverage area of the network device. A terminal device within the coverage area may perform direct communication (also referred to as sidelink communication) with a terminal device outside the coverage area. For example, FIG. 1 to FIG. 3 show architectures of a plurality of communication systems to which embodiments of this application are applicable.

FIG. 1 shows an architecture of a communication system in which terminal devices are located within a coverage area of a network device (in-coverage). The communication system includes cellular communication and direct communication for the terminal devices. The communication system shown in FIG. 1 may include at least one network device and at least two terminal devices. FIG. 1 merely shows one network device and two terminal devices (a terminal device 1 and a terminal device 2 shown in FIG. 1). Both the terminal device 1 and the terminal device 2 are located within the coverage area of the network device. Both the terminal device 1 and the terminal device 2 can communicate with the network device through a Uu interface. For example, the network device may send information to the terminal device 1 through a downlink, and the terminal device 1 may send information to the network device through an uplink. Communication between the network device and the terminal device 2 is similar. The terminal device 1 may perform, through a sidelink, direct communication with the terminal device 2, that is, perform PC5 communication.

FIG. 2 shows an architecture of a communication system in which a part of terminal devices is located within a coverage area of a network device (partial coverage). The communication system includes cellular communication and direct communication for the terminal devices. The communication system shown in FIG. 2 may include at least one network device and at least two terminal devices. The part of the terminal devices is located within the coverage area of the network device, and another part of the terminal devices is located outside the coverage area of the network device. FIG. 2 merely shows one network device and two terminal devices (a terminal device 1 and a terminal device 2 shown in FIG. 2). The terminal device 1 is located within the coverage area of the network device, and the terminal device 2 is located outside the coverage area of the network device. The terminal device 1 may communicate with the network device through a Uu interface. For example, the network device may send information to the terminal device 1 through a downlink, and the terminal device 1 may send information to the network device through an uplink. The terminal device 1 may perform, through a sidelink, direct communication with the terminal device 2, that is, perform PC5 communication.

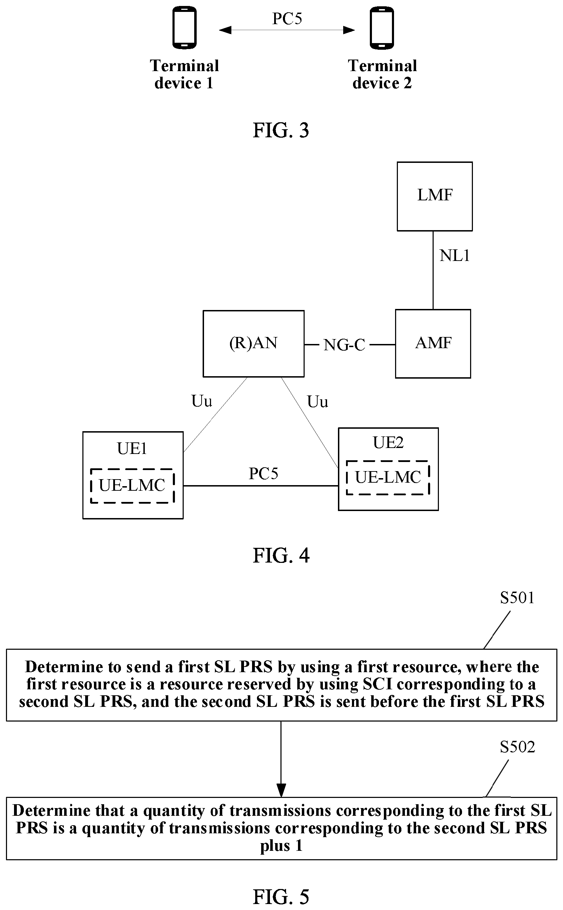

FIG. 3 shows an architecture of a communication system in which terminal devices are located outside a coverage area of a network device (out-of-coverage). The communication system includes direct communication for the terminal devices. The communication system shown in FIG. 3 may include at least two terminal devices, and all the terminal devices are located outside the coverage area of the network device. FIG. 3 merely shows two terminal devices (a terminal device 1 and a terminal device 2 shown in FIG. 3). The terminal device 1 may perform, through a sidelink, direct communication with the terminal device 2, that is, perform PC5 communication.

In the system shown in FIG. 1, FIG. 2, or FIG. 3, the terminal device 1 may be used as a transmit end terminal device, and the terminal device 2 may be used as a receive end terminal device; or the terminal device 2 may be used as a transmit end terminal device, and the terminal device 1 may be used as a receive end terminal device. This is not limited in embodiments of this application.

FIG. 4 is a diagram of a possible network architecture to which an embodiment of this application is applicable. As shown in FIG. 4, the possible network architecture to which this application is applicable may include three parts: terminal devices (for example, the terminal device 1 and the terminal device 2 shown in FIG. 1, FIG. 2, or FIG. 3), an access network device (for example, a next generation (next generation, NG) radio access network ((radio) access network, (R)AN) device), and a core network (core network).

### (1) Terminal device

In this embodiment of this application, the terminal device may include a user equipment (user equipment, UE)-location management component (location management component, LMC). The UE-LMC may be a component or an application that is deployed on the terminal device and that has a part of a location management function (location management function, LMF), and is configured to support a location service of a PC5 interface. An LMC in each terminal device in FIG. 4 is displayed as dashed lines, to indicate that a terminal device side may include the LMC, or may not include the LMC. In FIG. 4, an example in which both two terminal devices include LMCs is used.

In this embodiment of this application, the terminal devices shown in FIG. 4 may be the terminal devices in the communication systems shown in FIG. 1 to FIG. 3. For example, a terminal device 1 and a terminal device 2 may be the two terminal devices that are located within the coverage area of the network device and that are shown in FIG. 1. For another example, one of the terminal device 1 and the terminal device 2 may be the terminal device that is located within the coverage area of the network device and that is shown in FIG. 2, and the other of the terminal device 1 and the terminal device 2 may be the terminal device that is located outside the coverage area of the network device and that is shown in FIG. 2. The terminal device 1 and the terminal device 2 may be the two terminal devices that are located outside the coverage area of the network device and that are shown in FIG. 3.

The terminal device may also be referred to as a terminal, user equipment (user equipment, UE), a mobile station, a mobile terminal, or the like. The terminal device may be a fixed device, a mobile device, a handheld device, a wearable device, a vehicle-mounted device, or a wireless apparatus (for example, a communication module or a chip system) built in the foregoing devices. The terminal device may be widely used in various scenarios, for example, self-driving (self-driving), telemedicine (remote medical), a smart grid (smart grid), smart furniture, smart office, smart wearables, smart transportation, a smart city (smart city), an uncrewed aerial vehicle, and a robot, device-to-device (device-to-device, D2D), vehicle-to-everything (vehicle to everything, V2X) communication, machine-to-machine communication (machine-type communication, MTC), internet of things (internet of things, IoT), virtual reality (virtual reality, VR), augmented reality (augmented reality, AR), industrial control (industrial control), self-driving (self-driving), telemedicine (remote medical), a smart grid (smart grid), autonomous driving, smart furniture, smart office, smart wearables, smart transportation, and smart city. The terminal device may be a mobile phone, a tablet computer, a computer with a wireless transceiver function, a wearable device, a vehicle, an uncrewed aerial vehicle, a helicopter, an aircraft, a ship, a robot, a robot arm, a smart home device, a mobile station (mobile station, MS), a subscriber unit (subscriber unit), a cellular phone (cellular phone), a smart phone (smart phone), a wireless data card, a personal digital assistant (personal digital assistant, PDA) computer, a tablet computer, a wireless modem (modem), a handheld device (handset), a laptop computer (laptop computer), or a machine type communication (machine type communication, MTC) terminal, or the like. A specific technology and a specific device form that are used for the terminal device are not limited in embodiments of this application.

### (2) Network device

The network device may include an access network device and/or a core network device.

### (2.1) Access network device

The access network (access network, AN) device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a base station in a 6th generation (6th generation, 6G) mobile communication system, a base station in a future mobile communication system, an access node in a wireless fidelity (wireless fidelity, Wi-Fi) system, or the like. The access network device may alternatively be a module or a unit that completes a part of functions of a base station, for example, may be a central unit (central unit, CU), or may be a distributed unit (distributed unit, DU). The access network device may be a macro base station, or may be a micro base station or an indoor base station, or may be a relay node, a donor node, or the like. A specific technology and a specific device form that are used for the access network device are not limited in embodiments of this application. In this embodiment of this application, an example in which the base station is used as the access network device is used for description.

The base station and the terminal device may be located at a fixed location, or may be movable. The base station and the terminal device may be deployed on land, including an indoor or outdoor device, a handheld device, or a vehicle-mounted device; or may be deployed on water; or may be deployed on an airplane, a balloon, and an artificial satellite in air. Application scenarios of the base station and the terminal device are not limited in embodiments of this application.

In a possible scenario, a plurality of RAN nodes coordinate to assist the terminal in implementing radio access, and different RAN nodes separately implement a part of functions of the base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an open radio access network (open radio access network, O-RAN, open RAN, or ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination thereof.

### (2.2) Core network device

Network elements in the core network include an access and mobility management function (access and mobility management function, AMF) network element, a location management function (location management function, LMF) network element, and the like. The network elements may further include an evolved serving mobile location center (evolved serving mobile location center, E-SMLC) network element, a unified data management (unified data management, UDM) network element, an application function (application function, AF) network element, and the like. The base station may communicate with the AMF network element through an NG-C interface, and the AMF network element may be equivalent to a router for communication between a gNB and the LMF. The LMF network element may estimate a location of a terminal device, and the AMF communicates with the LMF through an NLs interface.

FIG. 5 is a flowchart of a sidelink communication method according to an embodiment of this application. The method may be applied to the communication system shown in FIG. 4. The method may be specifically performed by a transmit end terminal device or a chip in the transmit end terminal device. The method includes the following steps.

S501: Determine to send a first SL PRS by using a first resource, where the first resource is a resource reserved by using SCI corresponding to a second SL PRS, and the second SL PRS is sent before the first SL PRS.

The SCI may be first-stage SCI.

The resource reserved by using the SCI may also be referred to as a reserved resource, and may be specifically a time-frequency resource. Reserved resources may be understood as some time-frequency resources that are after SCI sent by a terminal device and that are reserved by using the SCI. In practice, there is another definition that a time-frequency resource scheduled in a current slot of the SCI is categorized as the reserved resource. In this embodiment of this application, for a concept of a reserved resource used when statistics on a quantity of transmissions of an SL PRS are collected, an example in which the reserved resource is a resource after a slot in which the SCI is located is used. In an actual situation, when time corresponding to the reserved resource arrives, the terminal device may transmit the SL PRS by using the reserved resource, or may not use the reserved resource, that is, the reserved resource is not used.

The reserved resource may be periodic or may be aperiodic. For example, for an aperiodic SL service, when reserving a resource for the service, the terminal device may perform an aperiodic reservation, for example, only a resource used for a next PRS transmission is reserved by using the SCI. For example, for a periodic SL service, when reserving a resource for the service, the terminal device may perform a periodic reservation, for example, resources in one or more periods are reserved by using the SCI. Further, when the periodic reservation exists, the terminal device may further perform one or more aperiodic reservations in a single period during the periodic reservation.

When the periodic reservation exists, different resources in a same period may be used for a plurality of SL PRS transmissions, in other words, a latter SL PRS transmission in two adjacent SL PRS transmissions in the same period is a retransmission of a former SL PRS transmission. Resources in different periods are used to transmit different SL PRSs, in other words, an SL PRS transmission in a latter period in two adjacent periods is a new transmission in comparison with an SL PRS transmission in a former period. When no periodic reservation exists (in other words, when only the aperiodic reservation exists), a latter SL PRS transmission in two adjacent SL PRS transmissions is a retransmission of a former SL PRS transmission.

It may be understood that the periodic SL service means that SL service data is transmitted based on a fixed period. The aperiodic SL service means that SL service data is sent not based on a fixed sending period.

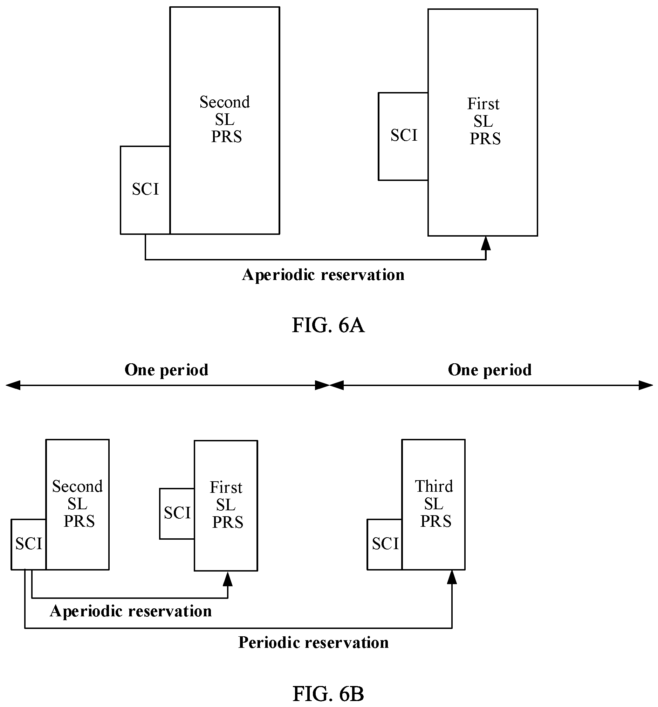

In this embodiment of this application, the first resource is an aperiodically reserved resource. For example, the first resource is a resource reserved by performing the aperiodic reservation, as shown in FIG. 6A; or the first resource is a resource reserved by performing the aperiodic reservation in a period corresponding to the periodic reservation, as shown in FIG. 6B. FIG. 6A and FIG. 6B show examples in which SCI and SL PRSs are transmitted on different symbols, and different SL PRSs occupy a same bandwidth in frequency domain.

In a possible design, that the second SL PRS is sent before the first SL PRS may be as follows: The second SL PRS is a last SL PRS of the first SL PRS, that is, no other SL PRS is sent between the first SL PRS and the second SL PRS.

Optionally, the transmit end terminal device further determines the first resource. For example, in a resource selection mode 1, the transmit end terminal device may obtain, from a network device (for example, a base station), the first resource selected by the network device for the transmit end terminal device. In a resource selection mode 2, the transmit end terminal device may select the first resource from a resource pool.

S502: Determine that a quantity of transmissions corresponding to the first SL PRS is a quantity of transmissions corresponding to the second SL PRS plus 1.

The quantity of transmissions is the quantity of transmissions of the SL PRS (a quantity of SL PRS transmissions or a quantity of transmissions for short).

Specifically, when a resource (that is, the first resource) used to transmit the first SL PRS is a resource reserved by using SCI corresponding to a previously transmitted SL PRS (that is, the second SL PRS), the first SL PRS is counted as one retransmission. Therefore, the quantity of transmissions corresponding to the first SL PRS is the quantity of transmissions corresponding to the second SL PRS plus 1. For example, if the quantity of transmissions corresponding to the second SL PRS is 1 (for example, the second SL PRS is initially transmitted), the quantity of transmissions corresponding to the first SL PRS is 2 (that is, the first SL PRS is retransmitted); or for example, if the quantity of transmissions corresponding to the second SL PRS is 2 (for example, the second SL PRS is retransmitted), the quantity of transmissions corresponding to the first SL PRS is 3 (that is, the first SL PRS is retransmitted).

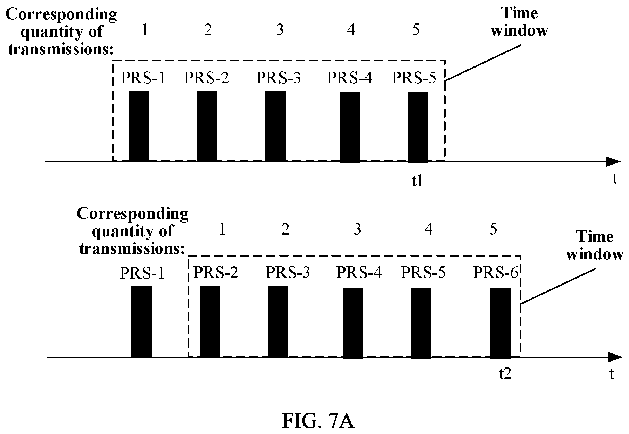

It may be understood that, the quantity of transmissions corresponding to the second SL PRS in step S502 is a quantity of transmissions corresponding to the second SL PRS when or after the first SL PRS is sent by using the first resource. Before it is determined that the first SL PRS is to be sent by using the first resource and when or after it is determined that a second SL PRSS is to be sent by using a second resource, a quantity of transmissions corresponding to the second SL PRS may be the same as or different from the quantity of transmissions corresponding to the second SL PRS in step S502. In other words, the quantity of transmissions corresponding to the second SL PRS may change with time. For example, when a time window shown in the following example slides, an SL PRS covered by the time window (that is, a statistical range of the quantity of transmissions of the SL PRS) changes, and further, the quantity of transmissions corresponding to the second SL PRS changes. For details, refer to the following example shown in FIG. 7A.

In some embodiments, the determining that the quantity of transmissions corresponding to the first SL PRS is the quantity of transmissions corresponding to the second SL PRS plus 1 may also be described as: updating the quantity of transmissions of the SL PRS, increasing the quantity of transmissions of the SL PRS by 1, or the like. This is not limited in this embodiment of this application.

In the foregoing solution, the transmit end terminal device counts an SL PRS sent by using a resource reserved by using the SCI corresponding to a previous (for example, last) SL PRS transmission as one retransmission, so that statistics on the quantity of transmissions of the SL PRS are collected. Therefore, congestion control for a PRS can be supported, and system communication performance can be improved.

In a possible design, the first resource (that is, a resource reserved by using the SCI) is a resource in a dedicated resource pool, and the dedicated resource pool is a resource pool that is used to send an SL PRS but cannot be used to send a PSSCH. In other words, the solution in this embodiment of this application may be used to calculate a quantity of transmissions of the SL PRS in the dedicated resource pool, and provide support for congestion control for the SL PRS in the dedicated resource pool.

In a possible design, the transmit end terminal device may collect statistics only on a quantity of transmissions of the SL PRS sent within a preset time range. Correspondingly, a sending moment of the first SL PRS and a sending moment of the second SL PRS fall within the preset time range.

In a specific implementation, the preset time range falls within a period corresponding to a periodically reserved resource. For example, the preset time range is a period corresponding to the periodically reserved resource.

An example is as follows:
(1) The transmit end terminal device determines, based on the resource selection mode 1 or the resource selection mode 2, a resource used for an initial transmission.
(2) The transmit end terminal device sends SCI-1 and an SL PRS-1 by using the initial transmission resource, and counts a current transmission as a 1^{st} transmission. A periodic resource and/or an aperiodic resource may be reserved by using the SCI-1.

When the periodic resource is reserved by using the SCI-1, the SCI-1 may specify a reservation period. The reservation period is, for example, 100 ms, in other words, a periodic SL PRS resource with a period of 100 ms is reserved. Alternatively, the reservation period may be 0 ms, in other words, no periodic resource is reserved.

When the aperiodic resource is reserved by using the SCI-1, a reserved aperiodic resource is a resource in one or two slots in a maximum of 32 logical slots after an initial transmission. For ease of description, the aperiodic resource reserved by using the SCI-1 is denoted as a resource-1 herein.

(3) The transmit end terminal device sends SCI-2 and an SL PRS-2 by reserving the aperiodic resource by using the SCI-1 (that is, the resource-1). Because the SCI-2 and the SL PRS-2 are transmitted by reserving the aperiodic resource reserved by using the SCI-1, if a transmission of the SCI-2 and a transmission of the SL PRS-2 are not performed later than a next periodic transmission corresponding to a periodic reservation of the initial transmission, the SL PRS-2 is counted as one retransmission, and a current transmission is counted as a 2^{nd} transmission. It should be understood that a resource in one or two slots in a maximum of 32 logical slots after the current transmission may continue to be reserved by using the SCI-2. For ease of description, the aperiodic resource reserved by using the SCI-2 is denoted as a resource-2 herein.

(4) The transmit end terminal device sends SCI-3 and an SL PRS-3 by reserving the aperiodic resource by using the SCI-2 (that is, the resource-2). Because the SCI-3 and the SL PRS-3 are transmitted by reserving the aperiodic resource reserved by using the SCI-2, if a transmission of the SCI-3 and a transmission of the SL PRS-3 are not performed later than a next periodic transmission corresponding to a periodic reservation of the initial transmission, the SL PRS-3 is counted as one retransmission, and a current transmission is counted as a 3^{rd} transmission.

Deduction may be performed by analog. In other words, if the transmit end terminal device sends SCI-N and an SL PRS-N during an N^{th} transmission by reserving an aperiodic resource by using an (N-1)^{th} transmission, the N^{th} transmission is counted as one retransmission, and a quantity of transmissions is increased by 1, where N is a positive integer greater than 1.

(5) If the transmit end terminal device sends SCI-M and an SL PRS-M during an M^{th} transmission by reserving another resource other than an aperiodic resource by using an (M-1)^{th} transmission, a quantity of transmissions is recalculated for the M^{th} transmission. Alternatively, if the transmit end terminal device sends SCI-M and an SL PRS-M during an M^{th} transmission by reserving an aperiodic resource reserved by using an (M-1)^{th} transmission, but the M^{th} transmission is not performed later than a next periodic transmission corresponding to a periodic reservation of the initial transmission (that is, the initial transmission and the M^{th} transmission are not in a same period), a quantity of transmissions is recalculated for the M^{th} transmission. M is a positive integer greater than 1.

It may be understood that a resource corresponding to the initial transmission and a resource corresponding to the retransmission (a time-frequency resource, for example, an index of an OFDM symbol or an RE index in a symbol) may be different, but fields corresponding to the initial transmission and the retransmission, such as source identifiers (source ID), destination identifiers (destination ID), and priorities (priority) in SCI, need to be consistent. A same source ID field ensures that the initial transmission and the retransmission correspond to a same transmit end terminal device. A same destination ID field ensures that the initial transmission and the retransmission correspond to a same receive end terminal device. A same priority field ensures that the initial transmission and the retransmission correspond to an unchanged priority. The destination ID herein may be a unicast destination ID, or may be a multicast destination ID corresponding to information about a multicast receive end terminal device group, or may be a broadcast destination ID corresponding to a broadcast service type. This is not limited in this application.

In this way, when the periodic SL service exists, statistics only on an SL PRS within a single period can be collected, to avoid collecting statistics on quantities of transmissions of SL PRSs across periods (because an SL PRS initially transmitted in a new period needs to be newly transmitted instead of being retransmitted in comparison with an SL PRS sent in an old period), and improve reliability of the solution.

In another specific implementation, the preset time range falls within one time window. For example, the preset time range is one time window.

In some embodiments, a position of the time window in time domain is determined based on a position of the sending moment of the first SL PRS in time domain.

For example, the transmit end terminal device may obtain a configuration of the time window by the network device, and the configuration may include a window length W (that is, a length of the time window). The window length may be a quantity of physical slots, a quantity of milliseconds, a quantity of seconds, a quantity of system frames, a quantity of subframes, a quantity of logical slots, or the like. This is not limited.

Correspondingly, at a moment T (for example, the moment at which the first SL PRS is sent), the transmit end terminal device determines that the quantity of transmissions of the SL PRS is a quantity of transmissions of the SL PRS in a time period (T-W, T], [T-W, T], or [T-W, T).

It may be understood that, because a time window corresponding to each SL PRS is determined based on a sending moment of the SL PRS, time windows corresponding to different SL PRSs may be different. In other words, the position of the time window may change with time. However, with sliding of the time window, a part of previously transmitted SL PRSs (referred to as historical SL PRSs) may move out of the time window. In this case, the historical SL PRSs that move out of the time window are not within a statistical range. Therefore, a quantity of transmissions corresponding to the historical SL PRSs in the time window need to be updated.

For example, refer to FIG. 7A. At a moment t1, a time window includes a PRS-1, a PRS-2, a PRS-3, a PRS-4, and a PRS-5, and quantities of transmissions corresponding to the PRS-1, the PRS-2, the PRS-3, the PRS-4, and the PRS-5 are respectively 1, 2, 3, 4, and 5. At a moment t2, because the time window slides, the PRS-1 moves out of the time window, and a PRS-6 is newly added in the time window. In other words, the time window includes the PRS-2, the PRS-3, the PRS-4, the PRS-5, and the PRS-6. Quantities of transmissions corresponding to the PRS-2, the PRS-3, the PRS-4, and the PRS-5 need to be respectively subtracted by 1, and the quantities of transmissions corresponding to the PRS-2, the PRS-3, the PRS-4, and the PRS-5 are respectively updated to 1, 2, 3, and 4. A quantity of transmissions corresponding to the PRS-6 is equal to an updated quantity of transmissions corresponding to the PRS-5 plus 1, that is, 4+1=5. It may be understood that the time window shown in FIG. 7A is merely an example, and is not limited thereto in an actual implementation.

In some other embodiments, the time window is a time window within which the sending moment of the first SL PRS falls and that is in a plurality of time windows that periodically appear in time domain. In other words, the position of the time window may be fixed.

For example, the transmit end terminal device may obtain a configuration of the time window by the network device, and the configuration may include a period of the time window. Optionally, the configuration may further include at least one of a start position, an end position, a window length, or the like of the time window. When the start position is not configured, the transmit end terminal device may consider by default that the time window starts from a system frame 0, a subframe 0, or a 1^{st} logical slot 0, that is, the start position is 0. The period (or the start position, the end position, the window length, or the like) may be a quantity of physical slots, a quantity of milliseconds, a quantity of seconds, a quantity of system frames, a quantity of subframes, a quantity of logical slots, or the like. This is not limited.

Correspondingly, at a moment T (for example, the sending moment of the first SL PRS), the transmit end terminal device determines that the quantity of transmissions of the SL PRS is a quantity of transmissions of the SL PRS in a time window within which the moment T falls, that is, a quantity of transmissions of the SL PRS in a time period of [kP+O, (k+1)P+] or [kP+O, (k+1)P+O), or (kP+O, (k+1)P+O]. A value of k is 0 or a positive integer, and the value of k makes T belong to the time period. P is the period of the time window, and O is the start position of the time window.

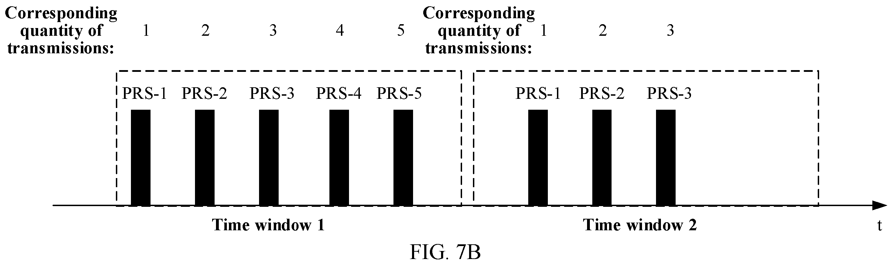

For example, refer to FIG. 7B. Two time windows are shown. A time window 1 includes a PRS-1, a PRS-2, a PRS-3, a PRS-4, and a PRS-5, and quantities of transmissions corresponding to the PRS-1, the PRS-2, the PRS-3, the PRS-4, and the PRS-5 are respectively 1, 2, 3, 4, and 5. At a moment t2, a time window 2 includes a PRS-6, a PRS-7, and a PRS-8, and quantities of transmissions corresponding to the PRS-6, the PRS-7, and the PRS-8 are respectively 1, 2, and 3. It may be understood that the time windows shown in FIG. 7B are merely examples, and are not limited thereto in an actual implementation.

In this way, statistics on a quantity of transmissions of the SL PRS sent in one time window can be collected.

It may be understood that only one of the period and the time window may exist, or both the period and the time window may exist. When both the period and the time window exist, in some embodiments, one period corresponding to the periodically reserved resource may include one or more time windows. In this case, a statistical range of the SL PRS may not exceed one time window. In some other embodiments, one time window may include one or more periods corresponding to the periodically reserved resource. In this case, the statistical range of the SL PRS may not exceed one period corresponding to the periodically reserved resource. A position relationship between the period and the time window is not limited in this embodiment of this application.

In a possible design, if the quantity of transmissions corresponding to the first SL PRS reaches a threshold, the transmit end terminal device may stop a retransmission of the SL PRS.

For example, the transmit end terminal device stops a transmission of the first SL PRS by using the first resource. For example, a physical layer of the transmit end terminal device discards the first SL PRS, or a MAC layer of the transmit end terminal device stops sending of the first SL PRS.

For example, a third resource is reserved by using SCI corresponding to the first SL PRS, and the transmit end terminal device may transmit the first SL PRS by using the first resource, but the transmit end terminal device does not transmit the SL PRS by using the third resource.

For example, the transmit end terminal device no longer reserves an aperiodic resource (or no longer reserves a resource used for a retransmission of the SL PRS).

In a specific implementation, the threshold may be a maximum quantity of transmissions of the SL PRS predefined or configured by using signaling, for example, a maximum quantity of transmissions of the SL PRS determined based on a transmission priority and a current CBR.

In this way, congestion control for the SL PRS can be implemented, and system communication performance can be improved.

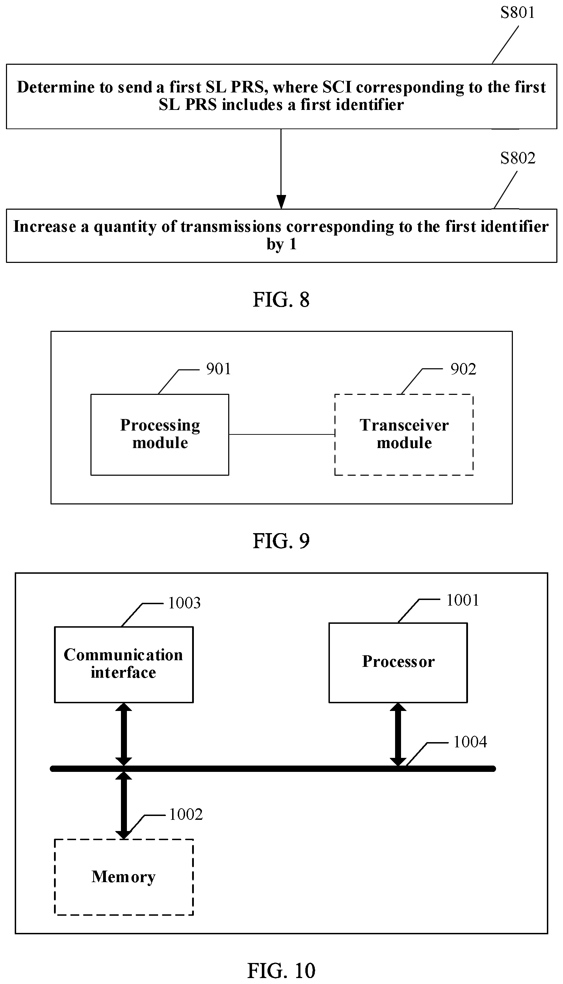

FIG. 8 is a flowchart of another sidelink communication method according to an embodiment of this application. The method may be applied to the communication system shown in FIG. 4. The method may be specifically performed by a transmit end terminal device or a chip in the transmit end terminal device. The method includes the following steps.

S801: Determine to send a first SL PRS, where SCI corresponding to the first SL PRS includes a first identifier.

In this embodiment of this application, an identifier is an identifier for collecting statistics on a quantity of transmissions of an SL PRS (a quantity of SL PRS transmissions or a quantity of transmissions for short). In a specific implementation, the identifier may have another name, for example, a PRS identifier or a sidelink positioning reference signal process identifier (SL PRS Process ID). This is not limited in this embodiment of this application.

In a possible design, the identifier may be an identifier, for example, a combination identifier (combination ID), used by a receive end to perform combined measurement on a plurality of SL PRSs. In other words, the receive end may perform combined measurement on a plurality of SL PRSs corresponding to a same identifier. For example, the first identifier is used by the receive end to perform combined measurement on SL PRSs that correspond to the first identifier and that are in different transmissions.

S802: Increase a quantity of transmissions of an SL PRS corresponding to the first identifier by 1.

Specifically, the transmit end terminal device accumulates a quantity of times of sending an SL PRS corresponding to a same identifier, and uses an accumulation result as the quantity of transmissions of the SL PRS. For example, when it is determined that the first SL PRS is to be sent, and the SCI corresponding to the first SL PRS includes the first identifier, the quantity of transmissions of the SL PRS corresponding to the first identifier is increased by 1.

In some embodiments, the increasing the quantity of transmissions of the SL PRS corresponding to the first identifier by 1 may also be described as: updating the quantity of transmissions of the SL PRS corresponding to the first identifier, or the like. This is not limited in this embodiment of this application.

The following uses a specific example for description:
(1) The transmit end terminal device determines an initial transmission resource based on a resource selection mode 1 or a resource selection mode 2. The transmit end terminal device sends SCI-1 and an SL PRS-1 by using the initial transmission resource. An SL PRS process ID indicated in the SCI-1 is a value of XX, and a current transmission is counted as a 1^{st} transmission of the SL PRS whose SL PRS process ID is the value of XX.
(2) The transmit end terminal device determines a retransmission resource based on the resource selection mode 1 or the resource selection mode 2. The transmit end terminal device sends SCI-2 and an SL PRS-2 by using the retransmission resource. An SL PRS process ID indicated in the SCI-2 is a value of XX, and a quantity of transmissions corresponding to the value of XX is increased by 1. In other words, a current transmission is counted as a 2^{nd} transmission of the SL PRS whose SL PRS process ID is the value of XX.
(3) The transmit end terminal device determines a retransmission resource based on the resource selection mode 1 or the resource selection mode 2. The transmit end terminal device sends SCI-3 and an SL PRS-3 by using the retransmission resource. An SL PRS process ID indicated in the SCI-3 is a value of XX, and a quantity of transmissions corresponding to the value of XX is increased by 1. In other words, a current transmission is counted as a 3^{rd} transmission of the SL PRS whose SL PRS process ID is the value of XX.

**...**

Deduction may be performed by analog. If an SL PRS process ID corresponding to a transmission of an SL PRS of the transmit end terminal device changes, for example, is a value of YY, a quantity of transmissions corresponding to the value of YY is increased by 1, and the quantity of transmissions corresponding to the value of XX remains unchanged.

It may be understood that a resource corresponding to the initial transmission and a resource corresponding to the retransmission (a time-frequency resource, for example, an index of an OFDM symbol or an RE index in a symbol) may be different, but fields corresponding to the initial transmission and the retransmission, such as source identifiers (source ID), destination identifiers (destination ID), and priorities (priority) in SCI, need to be consistent.

In the foregoing solution, an identifier in the SCI is used to collect statistics on a quantity of transmissions of an SL PRS corresponding to a same identifier (for example, the first identifier), so that statistics on the quantity of transmissions of the SL PRS are collected. Therefore, congestion control for the SL PRS can be supported, and system communication performance can be improved.

In a possible design, a sending moment of the first SL PRS falls within a preset time range. Optionally, the preset time range may be one time window. For a specific implementation of the time window, refer to the foregoing related design. Details are not described herein again.

In a possible design, if the quantity of transmissions of the SL PRS corresponding to the first identifier reaches a threshold, the transmit end terminal device may further stop a transmission of the SL PRS corresponding to the first identifier.

For example, the transmit end terminal device stops sending of the first SL PRS. For example, a physical layer of the transmit end terminal device discards a packet corresponding to the first SL PRS, or a MAC layer of the transmit end terminal device stops sending of the first SL PRS.

For example, the transmit end terminal device may send the first SL PRS, but after sending the first SL PRS, the transmit end terminal device does not send the SL PRS corresponding to the first identifier.

For example, the transmit end terminal device no longer reserves a retransmission resource for the SL PRS corresponding to the first identifier.

In a specific implementation, the threshold may be a maximum quantity of transmissions of the SL PRS predefined or configured by using signaling, for example, a maximum quantity of transmissions of the SL PRS determined based on a transmission priority and a current CBR.

In the foregoing design manner, congestion control for the SL PRS can be implemented, and system communication performance can be improved.

It may be understood that the foregoing embodiments may be separately implemented, or may be implemented in combination with each other. This is not limited in embodiments of this application.

The methods provided in embodiments of this application are described above with reference to the accompanying drawings. The following describes apparatuses provided in embodiments of this application with reference to the accompanying drawings.

Based on a same technical concept, an embodiment of this application provides a communication apparatus. The apparatus includes modules/units/means configured to perform the methods performed by the transmit end terminal device in the foregoing method embodiments. The modules/units/means may be implemented by software, may be implemented by hardware, or may be implemented by hardware executing corresponding software.

For example, refer to FIG. 9. The apparatus may include a processing module 901. Optionally, the apparatus may further include a transceiver module 902.

The processing module 901 is configured to: determine to send a first SL PRS by using a first resource, where the first resource is a resource reserved by using SCI corresponding to a second SL PRS, and the second SL PRS is sent before the first SL PRS; and determine that a quantity of transmissions corresponding to the first SL PRS is a quantity of transmissions corresponding to the second SL PRS plus 1. The transceiver module 902 is configured to send the first SL PRS by using the first resource.

Alternatively, the processing module 901 is configured to: determine to send a first SL PRS, where SCI corresponding to the first SL PRS includes a first identifier; and increase a quantity of transmissions of an SL PRS corresponding to the first identifier by 1. The transceiver module 902 is configured to send the first SL PRS.

It should be understood that all related content of the steps in the foregoing method embodiments may be cited in function descriptions of the corresponding functional modules. Details are not described herein again.

Based on a same technical concept, refer to FIG. 10. An embodiment of this application further provides a communication apparatus. The communication apparatus includes:
at least one processor 1001 and a communication interface 1003 that is communicatively connected to the at least one processor 1001, where the at least one processor 1001 executes instructions stored in a memory 1002, to cause the apparatus to perform, through the communication interface 1003, the method steps performed by the transmit end terminal device in the foregoing method embodiments.

Optionally, the memory 1002 is located outside the apparatus.

Optionally, the apparatus includes the memory 1002. The memory 1002 is connected to the at least one processor 1001, and the memory 1002 stores the instructions that can be executed by the at least one processor 1001.

Optionally, the memory 1002 is located outside the apparatus.

Optionally, the apparatus includes the memory 1002. The memory 1002 is connected to the at least one processor 1001, and the memory 1002 stores the instructions that can be executed by the at least one processor 1001. That the memory 1002 is optional for the apparatus in FIG. 10 is represented by a dashed line.

The processor 1001 and the memory 1002 may be coupled through an interface circuit, or may be integrated together. This is not limited herein.

A specific connection medium between the processor 1001, the memory 1002, and the communication interface 1003 is not limited in this embodiment of this application. In this embodiment of this application, the processor 1001, the memory 1002, and the communication interface 1003 are connected through a bus 1004 in FIG. 10. The bus is represented by a bold line in FIG. 10. A connection manner between other components is merely an example for description, and is not limited thereto. The bus may be classified into an address bus, a data bus, a control bus, and the like. For ease of representation, only one bold line is used to represent the bus in FIG. 10, but this does not mean that there is only one bus or only one type of bus.

It should be understood that the processor mentioned in this embodiment of this application may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

For example, the processor may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA), or another programmable logic device, a discrete gate or a transistor logic device, a discrete hardware component, or the like. The general-purpose processor may be a microprocessor, or the processor may be any conventional processor or the like.

It should be understood that the memory mentioned in embodiments of this application may be a volatile memory or a non-volatile memory, or may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM), and a direct rambus dynamic random access memory (Direct Rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

It should be noted that the memory described in this specification is intended to include but is not limited to these memories and any other suitable type of memories.

Based on a same technical concept, an embodiment of this application further provides a computer-readable storage medium. The computer-readable storage medium stores computer-executable instructions. When the computer-executable instructions are invoked by the computer, the method in the foregoing method embodiment is performed.

Based on a same technical concept, an embodiment of this application further provides a computer program product. The computer program product includes a computer program or instructions. When the computer program or the instructions are run by a communication apparatus, the method in the foregoing method embodiment is performed.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art may make various modifications and variations to this application without departing from the scope of this application. In this way, this application is intended to cover these modifications and variations of this application provided that such modifications and variations fall within the scope of the claims of this application and equivalent technologies thereof.

## Claims

1. A sidelink communication method, comprising:
determining to send a first sidelink SL positioning reference signal PRS by using a first resource, wherein the first resource is a resource reserved by using sidelink control signaling SCI corresponding to a second SL PRS, and the second SL PRS is sent before the first SL PRS; and
determining that a quantity of transmissions corresponding to the first SL PRS is a quantity of transmissions corresponding to the second SL PRS plus 1.

2. The method according to claim 1, wherein the resource reserved by using the SCI is an aperiodically reserved resource.

3. The method according to claim 1 or 2, wherein a sending moment of the first SL PRS and a sending moment of the second SL PRS fall within a preset time range.

4. The method according to claim 3, wherein the preset time range is a period corresponding to a periodically reserved resource.

5. The method according to claim 3, wherein the preset time range is one time window.

6. The method according to claim 5, wherein a position of the time window in time domain is determined based on a position of the sending moment of the first SL PRS in time domain.

7. The method according to claim 5, wherein the time window is a time window within which the sending moment of the first SL PRS falls and that is in a plurality of time windows that periodically appear in time domain.

8. The method according to any one of claims 1 to 7, wherein the method further comprises:
if the quantity of transmissions corresponding to the first SL PRS reaches a threshold, stopping a retransmission of the SL PRS.

9. A sidelink communication method, comprising:
determining to send a first sidelink SL positioning reference signal PRS, wherein sidelink control signaling SCI corresponding to the first SL PRS comprises a first identifier; and
increasing a quantity of transmissions of an SL PRS corresponding to the first identifier by 1.

10. The method according to claim 9, wherein the first identifier is used by a receive end to perform combined measurement on SL PRSs that correspond to the first identifier and that are in different transmissions.

11. The method according to claim 9 or 10, wherein a sending moment of the first SL PRS falls within a preset time range.

12. The method according to claim 11, wherein the preset time range is one time window.

13. The method according to claim 12, wherein a position of the time window in time domain is determined based on a position of the sending moment of the first SL PRS in time domain.

14. The method according to claim 11, wherein the time window is a time window within which the sending moment of the first SL PRS falls and that is in a plurality of time windows that periodically appear in time domain.

15. The method according to any one of claims 9 to 14, wherein the method further comprises:
if the quantity of transmissions of the SL PRS corresponding to the first identifier reaches a threshold, stopping a transmission of the SL PRS corresponding to the first identifier.

16. A communication apparatus, comprising a module or a unit configured to perform the method according to any one of claims 1 to 8 or a module or a unit configured to perform the method according to any one of claims 9 to 15.

17. A communication apparatus, comprising a processor, wherein the processor is coupled to a memory, the memory is configured to store a program or instructions, and when the program or the instructions are executed by the processor, the communication apparatus is caused to perform the method according to any one of claims 1 to 8, or the communication apparatus is caused to perform the method according to any one of claims 9 to 15.

18. A computer-readable storage medium, wherein the computer-readable storage medium stores computer-executable instructions, and when the computer-executable instructions are invoked by the computer, the method according to any one of claims 1 to 8 is performed, or the method according to any one of claims 9 to 15 is performed.

19. A computer program product, wherein the computer program product stores instructions, and when the computer program product is run on a computer, the computer is caused to perform the method according to any one of claims 1 to 8, or perform the method according to any one of claims 9 to 15.
